# EUROPEAN PATENT APPLICATION

(11) **EP 3 337 009 A1**
(43) Date of publication of application: **20.06.2018**
(21) Application number: 16835205.2
(22) Date of filing: 10.08.2016
(51) Int. Cl.: H02J 13/00, H02J 3/14, H02J 3/38

(54) **MANAGEMENT SERVER, MANAGEMENT METHOD, AND MANAGEMENT SYSTEM**

(30) Priority: 12.08.2015 JP 2015159482; 28.08.2015 JP 2015169798
(71) Applicant: Kyocera Corporation, Kyoto-shi Kyoto 612-8501 (JP)
(72) Inventor: TERAI, Ryota, Kyoto-shi Kyoto 612-8501 (JP); AIKAWA, Shinji, Kyoto-shi Kyoto 612-8501 (JP); OKINO, Kenta, Kyoto-shi Kyoto 612-8501 (JP)
(74) Representative: TBK
(86) International application number: PCT/JP2016/073551
(87) International publication number: WO 2017/026508

(57) **Abstract**

A management server comprises a transmitter configured to transmit a power instruction message to a facility; and a manager configured to manage at least one of suppression influence information and storage apparatus information, the suppression influence information affecting a suppression of a forward power flow amount from a power grid to the facility or a reverse power flow amount from the facility to the power grid, the storage apparatus information being related to an energy storage apparatus installed in the facility. The transmitter is further configured to transmit the power instruction message to the facility, based on at least one of the suppression influence information and the storage apparatus information.

## Description

### TECHNICAL FIELD

The present disclosure relates to a management server, a management method and a management system.

### BACKGROUND ART

There has been known a power instruction message including a forward power flow suppression message for requesting control for a forward power flow amount (power supply amount) from a power grid to a facility (for example, DR; Demand Response) or a reverse power flow suppression message for requesting control for a reverse power flow amount from the facility to the power grid. The power instruction message is transmitted to a facility from a management server belonging to an electric power company, a power distribution company, or the like, through a communication line (for example, Patent Literature 1).

Furthermore, there has been proposed a technology of decreasing power consumption in home appliances installed in the facility in response to reception of a forward power flow suppression message. Specifically, the forward power flow suppression message is fulfilled in each facility by decreasing power consumption in home appliances on the basis of the priority (for example, Patent Literature 2).

### CITATION LIST

### PATENT LITERATURE

Patent Literature 1: Japanese application publication No. 2012-244665
Patent Literature 2: Japanese application publication No. 2013-51668

### SUMMARY

A management server according to a first aspect comprises a transmitter configured to transmit a power instruction message to a facility; and a manager configured to manage at least one of suppression influence information and storage apparatus information, the suppression influence information affecting a suppression of a forward power flow amount from a power grid to the facility or a reverse power flow amount from the facility to the power grid, the storage apparatus information being related to an energy storage apparatus installed in the facility. The transmitter is further configured to transmit the power instruction message to the facility, based on at least one of the suppression influence information and the storage apparatus information.

A management method according to a second aspect comprises a step A of transmitting a power instruction message to the facility; and a step B of managing at least one of suppression influence information and storage apparatus information, the suppression influence information affecting a suppression of a forward power flow amount from a power grid to the facility and a reverse power flow amount from the facility to the power grid, the storage apparatus information being related to an energy storage apparatus installed in the facility. The step A includes a step of transmitting the power instruction message to the facility, based on at least one of the suppression influence information and the storage apparatus information.

A management system according to a third aspect comprises a transmitter configured to transmit a power instruction message to the facility; and a manager configured to manage at least one of suppression influence information and storage apparatus information, the suppression influence information affecting a suppression of a forward power flow amount from a power grid to the facility and a reverse power flow amount from the facility to the power grid, the storage apparatus information being related to an energy storage apparatus installed in the facility. The transmitter is further configured to transmit the power instruction message to the facility, based on at least one of the suppression influence information and the storage apparatus information.

### BRIEF DESCRIPTION OF DRAWINGS

Fig. 1 is a diagram illustrating a power management system 1 according to an embodiment.
Fig. 2 is a diagram illustrating a lower management server 300 according to an embodiment.
Fig. 3 is a diagram illustrating suppression influence information according to an embodiment.
Fig. 4 is a diagram illustrating a management method according to an embodiment.
Fig. 5 is a diagram illustrating a specific example of a supply and demand adjustment plan according to an embodiment.
Fig. 6 is a diagram illustrating a power management system 1 according to an embodiment.
Fig. 7 is a diagram illustrating a communication apparatus 150 according to an embodiment.
Fig. 8 is a diagram illustrating a lower management server 300 according to an embodiment.
Fig. 9 is a diagram illustrating storage apparatus information according to an embodiment.
Fig. 10 is a diagram illustrating a communication method according to an embodiment.

### DESCRIPTION OF EMBODIMENTS

Embodiments of the present disclosure is described below by referring to the drawings. In the following description of the drawings, same or similar reference numerals are given to denote same or similar portions.

Note that the drawings are merely schematically shown and proportions of sizes and the like are different from actual ones. Thus, specific sizes and the like should be judged by referring to the description below. In addition, there are of course included portions where relationships or percentages of sizes of the drawings are different with respect to one another.

### [Summary of disclosure]

First, whether a forward power flow amount or a reverse power flow amount is suppressed appropriately in response to a power instruction message is influenced by whether each facility actually suppresses the forward power flow amount or the reverse power flow amount. Therefore, there is possibility that the appropriate suppression for the forward power flow amount or the reverse power flow amount is not realized by the power instruction message even in the case of equally assigning the forward power flow amount or the reverse power flow amount to each facility.

The management server according to the summary of disclosure includes a transmitter configured to transmit the power instruction message to the facility and a manager configured to manage suppression influence information affecting the suppression of the forward power flow amount from the power grid to the facility and the reverse power flow amount from the facility to the power grid, and the transmitter transmits the power instruction message to the facility based on the suppression influence information.

The management server according to the summary of disclosure manages suppression influence information affecting a suppression of a forward power flow amount or a reverse power flow amount and transmits the power instruction message to the facility based on the suppression influence information. According to the above-described configuration, since the facility transmits the power instruction message while predicting whether the power instruction message is fulfilled, it is possible to appropriately suppression the forward power flow amount or the reverse power flow amount by the power instruction message.

Second, in a case where the forward power flow amount or the reverse power flow amount is suppressed by transmission of the power instruction message, there is possibility that the suppression control for the forward power flow or the reverse power flow is inefficiently performed with respect to the entire group of facilities managed by the management server when the power instruction message is uniformly transmitted to all facilities managed by the management server.

The communication apparatus according to the summary of disclosure includes a controller configured to control an operation state of an energy storage apparatus and a transmitter configured to transmit storage apparatus information related to the energy storage apparatus to the management server that transmits the power instruction message.

In the summary of disclosure, the communication apparatus transmits storage apparatus information related to the energy storage apparatus to the management server. Accordingly, the management server can figure out, based on the storage apparatus information, information, such as whether the energy storage apparatus contributes to the suppression control for the forward power flow or the reverse power flow, or the contribution degree of the energy storage apparatus to the suppression control for the forward power flow or the reverse power flow. Therefore, it is possible to efficiently perform the suppression control for the forward power flow or the reverse power flow with respect to the entire group of facilities managed by the management server.

### [First embodiment]

### (Power Management System)

Hereinafter, a power management system according to a first embodiment will be described.

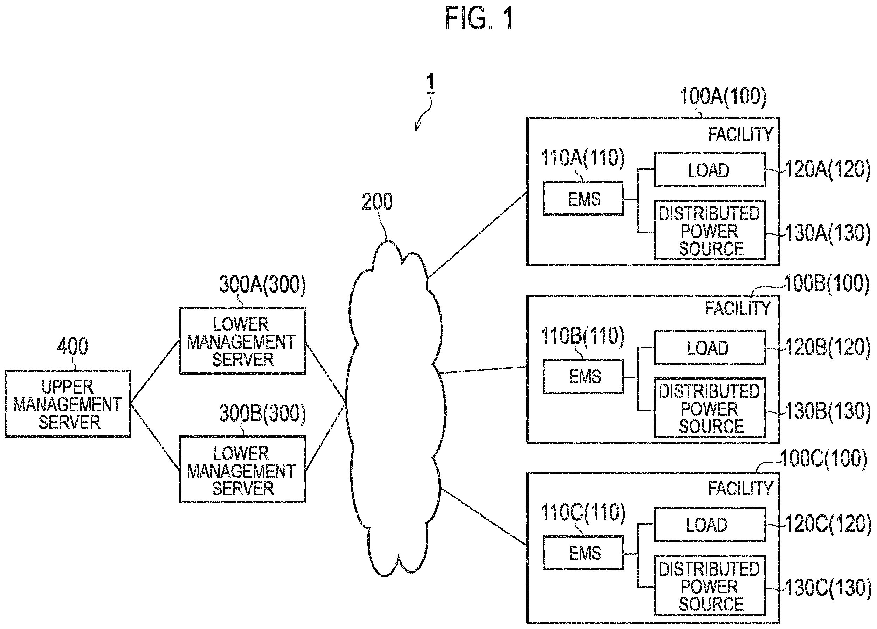

As illustrated in Fig. 1, a power management system 1 includes a facility 100, a network 200, a lower management server 300, and an upper management server 400.

The facility 100 includes an EMS 110, a load 120, and a distributed power source 130. The EMS 110 is an apparatus configured to manage power of an equipment installed in the facility 100 (Energy Management System). The load 120 is an equipment configured to consume power. The load 120 includes equipments, for example, refrigerators, lightings, air conditioners, televisions, and the like. The load 120 may include one equipment or may include a plurality of equipments. The distributed power source 130 is an equipment configured to generate power or store power. The distributed power source 130 includes equipments, for example, a solar cell, a fuel cell, a storage battery, and the like. The distributed power source 130 may include one equipment or may include a plurality of equipments.

According to a first embodiment, a facility 100A, a facility 100B, and a facility 100C are illustrated as examples of the facility 100. The facility 100A, the facility 100B, and the facility 100C have the same configuration.

The network 200 is a communication line configured to connect the facility 100 and the lower management server 300. The network 200 is, for example, Internet. The network 200 is supplied by a provider which each facility 100 has a contract with.

The lower management server 300 is a server belonging to an aggregator such as a power distribution company. The aggregator is a company which manages a forward power flow amount or a reverse power flow amount of the facility 100 that has a contract with the aggregator.

In the first embodiment, the lower management server 300A and the lower management server 300B are illustrated as examples of the lower management server 300. The lower management server 300A and the lower management server 300B have the same configuration. Alternatively, the upper management server 400 and the lower management server 300 may be integrated with each other.

The upper management server 400 is a server belonging to an electric power company such as a power company. The electric power company may entrust management for the forward power flow amount or the reverse power flow amount of the facility 100 to the aggregator.

In the first embodiment, the upper management server 400 transmits the forward power flow suppression message (for example, DR; Demand Response) requesting a suppression of a forward power flow amount (a supply amount of power) for the facility 100 from the power grid. The upper management server 400 transmits a reverse power flow suppression message requesting a suppression of the reverse power flow amount from the facility 100 to the power grid. In the first embodiment, a forward power flow suppression message and a reverse power flow suppression message are collectively referred to as a power instruction message.

Here, the forward power flow suppression message includes information indicating a suppression degree of a power amount (a forward power flow amount) supplied from the power grid to the facility 100. The suppression degree may be represented by an absolute value of the power amount (for example, xx kW). Alternatively, the suppression degree may be represented by a relative value of the power amount (for example, decrease by xx kW). Alternatively, the suppression degree may be represented by a suppression ratio of the power amount (for example, xx%). Alternatively, the suppression degree may be represented by predetermined steps (for example, 0, 1, 2, 3).

Alternatively, the forward power flow suppression message may include information indicating a power purchase price that is a consideration for the power flow from the power grid. By setting a high price as the power purchase price, the power amount supplied to the facility 100 from the power grid is expected to be suppressed.

The reverse power flow suppression message includes information indicating a suppression degree of a power amount (a reverse power flow amount) output from the facility 100 to the power grid. Specifically, the reverse power flow suppression message includes information indicating the suppression degree of an output of a distributed power source. The suppression degree may be represented by an absolute value of an output of the distributed power source (for example, xx kW). Alternatively, the suppression degree may be represented by a relative value of an output of the distributed power source (for example, decrease by xx kW). Alternatively, the suppression degree may be represented by predetermined steps (for example, 0, 1, 2, 3). Alternatively, the suppression degree may be represented by a suppression ratio of an output of the distributed power source (for example, xx %). The suppression ratio may be a ratio to an output certified, when a distributed power source is installed in the consumer's facility 100 as the output capability of a PCS that controls the distributed power source (hereinafter, equipment certified output). If the output capability of the distributed power source is different from that of the PCS, as the equipment certified output, a smaller output capability is selected out of the output capabilities. In a case where a plurality of PCSs are installed, the equipment certified output is a sum of the output capabilities of the plurality of PCSs.

Here, as formats of the forward power flow suppression message and the reverse power flow suppression message, it may be possible to use a private format or a format that complies with an automated demand response (ADR). Communication between the upper management server 400 and the lower management server 300 and communication between the lower management server 300 and the facility 100 may be performed according to a scheme that complies with an Open ADR standard (for example, Open ADR 2.0 or the like).

### (Management Server)

A management server according to the first embodiment will be described below. Here, the lower management server 300 is illustrated as an example of the management server. The management server may be the upper management server 400.

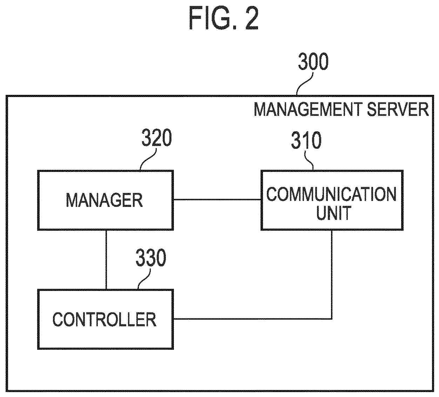

As illustrated in Fig. 2, the lower management server 300 includes a communication unit 310, a manager 320, and a controller 330.

The communication unit 310 is configured by a communication module and the like, and performs communication with the facility 100 and the upper management server 400. For example, the communication unit 310 receives, from the upper management server 400, a power instruction message including the forward power flow suppression message or the reverse power flow suppression message. The communication unit 310 transmits, through the network 200 (communication line), the power instruction message including the forward power flow suppression message or the reverse power flow suppression message to the facility 100. In order to entrust management for the forward power flow amount or reverse power flow amount of the facility 100 to the aggregator (lower management server 300), the content of the power instruction message transmitted to the facility 100 may be different from the content of the power instruction message received from the upper management server 400.

In the first embodiment, as descried below, based on suppression influence information affecting the suppression for the forward power flow amount or the reverse power flow amount, supply and demand adjustment plan is determined. The supply and demand adjustment plan is a plan for a transmission counterpart (facility 100) of the power instruction message and the content of the power instruction message (the suppression amount of the forward power flow or the suppression amount of the reverse power flow). Accordingly, the communication unit 310 transmits the power instruction message to the facility 100 based on the suppression influence information.

The manager 320 is configured by storages such as hard disk drive and the like, and manages the suppression influence information affecting the suppression of the forward power flow amount or the reverse power flow amount.

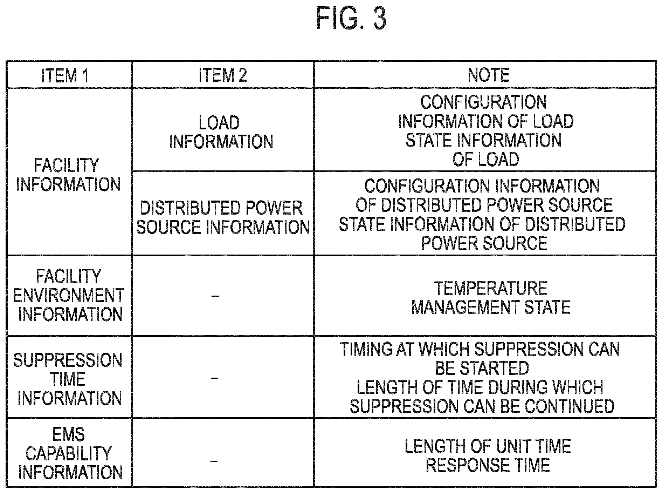

For example, the manager 320 manages the suppression influence information corresponding to at least one item, from among items illustrated in Fig. 3.

As illustrated in Fig. 3, the suppression influence information manages the suppression influence information corresponding to at least one, from among items, such as equipment information, facility environment information, suppression time information and EMS capability information.

"Equipment information" is information related to equipment included in the facility 100. For example, the equipment information includes at least one piece of information of configuration information indicating configuration of the equipment and state information indicating operation state of the equipment. Specifically, "equipment information" includes at least one piece of information of load information related to a load included in the facility 100 and distributed power source information related to a distributed power source included in the facility 100.

The load information includes information indicating a type of the load as the configuration information, or/and includes information indicating any one of power consumption of the load and operation state of the load as the state information. When the load information includes information indicating the type of the load, it is possible to predict whether the facility 100 has the load having margin to suppress the forward power flow amount or the reverse power flow amount. For example, the refrigerator does not have margin to suppress the forward power flow amount or the reverse power flow amount, and the air conditioner has margin to suppress the forward power flow amount or the reverse power flow amount. When the load information includes information indicating at least one of the power consumption of the load and the operation state of the load, it is possible to predict whether increase or decrease in the power consumption of the load included in the facility 100 can be adjusted. For example, when the power consumption of the air conditioner is large or a set temperature of the air conditioner is low, it is possible to predict that the forward power flow amount can be decreased by decrease in the power consumption, or it is possible to predict that it is hard to decrease the reverse power flow amount by increase in the power consumption. On the other hand, when the power consumption of the air conditioner is small or a set temperature of the air conditioner is high, it is possible to predict that it is hard to decrease the forward power flow amount by decrease in the power consumption, or it is possible to predict that the reverse power flow amount can be increased by increase in the power consumption.

The distributed power source information includes information indicating a type of the distributed power source as the configuration information, or/and includes information indicating a possible output amount of the distributed power source as the state information. When the distributed power source information includes information indicating a type of the distributed power source, it is possible to predict whether the forward power flow amount or the reverse power flow amount can be suppressed by output adjustment of the distributed power source. For example, when the facility 100 includes a power generation apparatus, such as a solar cell or a fuel cell, it is possible to predict that the forward power flow amount or the reverse power flow amount can be suppressed by output adjustment of the power generation apparatus. Similarly, when the facility 100 includes a storage battery, it is possible to predict that the forward power flow amount or the reverse power flow amount can be suppressed by charge and discharge power adjustment of the storage battery. When the distributed power source information includes a possible output amount, it is possible to predict a possible suppression amount for the forward power flow amount or the reverse power flow amount. The possible output amount may be the maximum output amount of the power generation apparatus, such as a solar cell or a fuel cell, may be a current output amount, or may be a difference between the current output amount and the maximum output amount. The possible output amount may be the maximum storage power capability of the storage battery, a current storage power amount, a current power storage ratio (%), a possible storage power amount, a difference between the current storage power amount and the maximum storage power amount, a target storage power amount, and an estimated storage power amount after a predetermined time has elapsed.

"Facility environment information" is information indicating environment of the facility 100. Specifically, the facility environment information includes information indicating at least one of a temperature of the facility 100 and a management state of the facility 100. The temperature of the facility 100 may be an outside air temperature of the facility 100 or may be a room temperature of the facility 100. According to the above-described information, it is possible to predict whether the forward power flow amount or the reverse power flow amount can be suppressed by adjusting the set temperature of the air conditioner even while maintaining for example, the comfort of the user of the facility 100. The management state of the facility 100 includes information indicating whether to allow energy saving management as the facility or whether the energy saving management is performed as the facility. For example, in the case where the energy saving management is allowed, when the energy saving management is not performed, it is possible to predict whether the forward power flow amount can be suppressed by performing energy saving management. Alternatively, when the energy saving management is performed, it is possible to predict whether the reverse forward power flow amount can be suppressed by releasing the energy saving management. Here, the energy saving management is management for decreasing power consumption of the load by adjusting the temperature of an air conditioner or brightness of a lighting. Content of the energy saving management may be set in facility 100 in advance or may be indicated by the lower management server 300.

"suppression time information" includes information indicating at least one of a timing at which the suppression of the forward power flow amount or the reverse power flow amount is capable of being started in the facility 100, a length of time during which the suppression of the forward power flow amount or the reverse power flow amount is capable of being continued in the facility 100, and a time period in which the forward power flow amount or the reverse power flow amount is capable of being suppressed in the facility 100. According to the above information, it is possible to predict a time period in which the forward power flow amount or the reverse power flow amount is capable of being suppressed.

"EMS capability information" is information related to the capability of the EMS 110 that controls the equipment included in the facility 100. The EMS capability information includes information indicating at least one of a length of unit time for which the EMS 110 is capable of controlling the equipment, a response time from reception of the power instruction message to a timing at which the suppression of the forward power flow amount or the reverse power flow amount is capable of being started, and the number of the suppression instructions that the EMS 110 handles (handling number), the suppression instruction is being for the forward power flow amount or the reverse power flow amount. When the EMS capability information includes the length of unit time, it is possible to figure out the length of unit time during which the forward power flow amount or the reverse power flow amount is capable of being suppressed and determine the above-described supply and demand adjustment plan for each time period. When the EMS capability information includes the response time, it is possible to quickly suppression the forward power flow amount or the reverse power flow amount by instructing the suppression for the forward power flow amount or the reverse power flow amount in turn from the facility 100 having the EMS 110 of which the response time is short. When the EMS capability information includes the handling number, it is possible to perform control such that unevenness does not occur in the sum of adjustment amounts for the facility 100 for each period of time and perform control such that the adjustment amount in the aggregator is identical to an instruction from the upper management server, by modifying the number of the instructions for suppression of the forward power flow amount or the reverse power flow amount which are transmitted to the EMS 110, to the handling number, for each EMS 110, e.g., by transmitting a plurality of instructions to the EMS 110 that handles a complicated instruction in which control-per-every-30-minutes is available by automatic control.

The controller 330 is configured by a CPU, a memory, or the like, and controls the communication unit 310 and the manager 320.

For example, the controller 330 determines the supply and demand adjustment plan based on the suppression influence information managed by the manager 320. As described above, the supply and demand adjustment plan is a plan for a transmission counterpart (facility 100) of the power instruction message and the content of the power instruction message (the suppression amount of the forward power flow or the suppression amount of the reverse power flow). The supply and demand adjustment plan may be determined per unit time length (for example, 30 minutes) for a period during which the suppression of the forward power flow amount or the reverse power flow amount is indicated by a power instruction message received from the upper management server 400. Specifically, based on the information illustrated in Fig. 3, the controller 330 selects the facility 100 of which the forward power flow amount or the reverse power flow amount is capable of being suppressed and also predicts a suppression amount for the forward power flow amount or the reverse power flow amount for each selected facility 100.

The controller 330 determines an incentive for a result obtained by suppressing the forward power flow amount or the reverse power flow amount with respect to the power instruction message. The incentive may be a monetary reward, may be a reward by intangible objects, such as monetary bond, gift certificate or coupon, or may be a reward by intangible objects, such as prizes.

### (Management Method)

A management method according to the first embodiment will be described below.

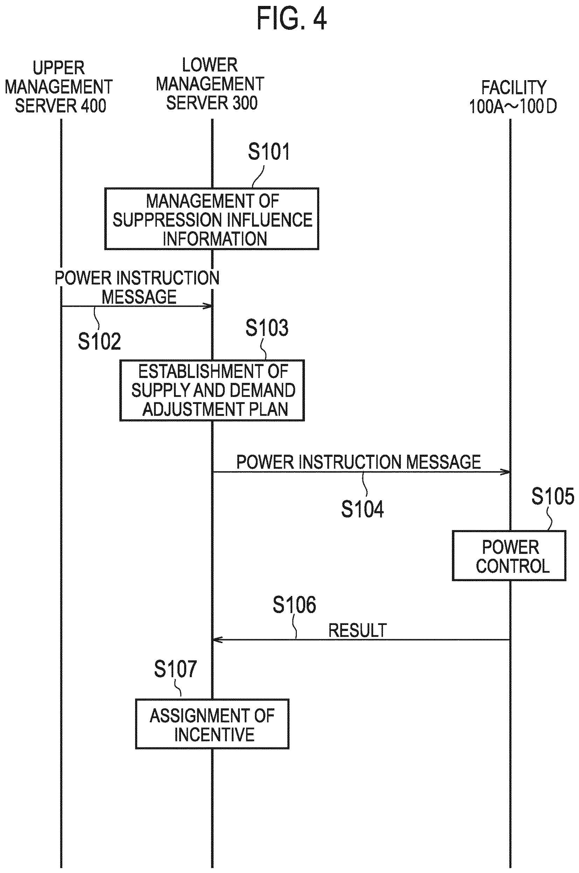

As illustrated in Fig. 4, in step S101, the lower management server 300 manages suppression influence information affecting a suppression of a forward power flow amount or a reverse power flow amount. The suppression influence information is the same as illustrated in Fig. 3.

In step S102, the lower management server 300 receives a power instruction message from the upper management server 400.

In step S103, the lower management server 300 determines supply and demand adjustment plan based on the suppression influence information. As described above, the supply and demand adjustment plan is a plan for a transmission counterpart (facility 100) of the power instruction message and the content of the power instruction message (the suppression amount of the forward power flow or the suppression amount of the reverse power flow).

In step S104, the lower management server 300 transmits the power instruction message to the facility 100 in response to a result of step S103.

In step S105, the facility 100 controls a forward power flow amount or a reverse power flow amount in response to the power instruction message.

In step S106, the facility 100 transmits a result of step S105 (a result of power control) to the lower management server 300.

In step S107, the lower management server 300 determines an incentive for a result obtained by suppressing the forward power flow amount or the reverse power flow amount with respect to the power instruction message, based on a result of reception in step S106.

### (Specific Example)

A specific example of the supply and demand adjustment plan according to the first embodiment will be described below. Here, a specific example of suppression plan of the forward power flow amount is illustrated.

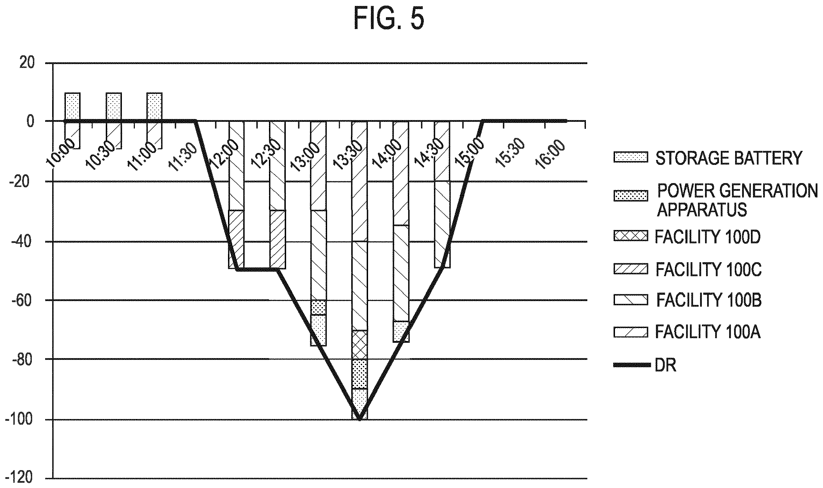

In Fig. 5, a case where a facility 100A to a facility 100D are managed by a lower management server 300 is illustrated as an example. The storage battery and a power generation apparatus are installed in one or more facility 100 of the facilities 100A to 100D. DR is a power instruction message (Demand Response) transmitted to the lower management server 300 from the upper management server 400. Also, the vertical axis in Fig. 5 is represented by an index with the start point of suppression of the forward power flow amount as zero.

In this case, the lower management server 300 determines the supply and demand adjustment plan in order to suppress a forward power flow amount according to DR received from the upper management server 400. The supply and demand adjustment plan is determined based on the suppression influence information as described below.

The DR received from the upper management server 400 is instructions illustrated below.

| | |
|---|---|
| 12:00-13:00 | decrease of 50 |
| 13:00-13:30 | decrease of 75 |
| 13:30-14:00 | decrease of 100 |
| 14:00-14:30 | decrease of 75 |
| 14:30-15:00 | decrease of 50 |

(1) The power instruction message illustrated below is transmitted to the facility 100A. For example, the EMS 110 included in the facility 100A has capability of 30 minutes as a unit time length for which a forward power flow amount is capable of being suppressed, and handles a plurality of suppression instructions.

| | |
|---|---|
| 10:00-11:30 | decrease of 10 |
| 13:00-13:30 | decrease of 30 |
| 13:30-14:00 | decrease of 40 |
| 14:00-14:30 | decrease of 35 |
| 14:30-15:00 | decrease of 20 |

(2) The power instruction message illustrated below is transmitted to the facility 100B. For example, the EMS 110 included in the facility 100B has capability of 1 hour as a unit time length for which a forward power flow amount is capable of being suppressed.

| | |
|---|---|
| 12:00-15:00 | decrease of 30 |

(3) The power instruction message illustrated below is transmitted to the facility 100C. For example, the EMS 110 included in the facility 100C has capability of 1 hour as a unit time length for which a forward power flow amount is capable of being suppressed.

| | |
|---|---|
| 12:00-13:00 | decrease of 20 |

(4) The power instruction message illustrated below is transmitted to the facility 100D. For example, the EMS 110 included in the facility 100D has capability of 30 minutes as a unit time length for which a forward power flow amount is capable of being suppressed.

| | |
|---|---|
| 13:30-14:00 | decrease of 10 |

(5) The power instruction message illustrated below is transmitted to the power generation apparatus. For example, the EMS 110 of the facility 100 having the power generation apparatus has capability of 30 minutes as a unit time length for which a forward power flow amount is capable of being suppressed, and handles a plurality of suppression instructions.

| | |
|---|---|
| 13:00-13:30 | decrease of 5 (power generation of 5) |
| 13:30-14:00 | decrease of 10 (power generation of 10) |

(6) The power instruction message illustrated below is transmitted to the storage battery. For example, the EMS 110 of the facility 100 having the storage battery has capability of 30 minutes as a unit time length for which a forward power flow amount is capable of being suppressed, and handles a plurality of suppression instructions.

| | |
|---|---|
| 10:00-11:30 | increase of 10 (charging of 10) |
| 13:00-14:30 | decrease of 10 (discharging of 10) |

As described above, since the lower management server 300 determines the supply and demand adjustment plan based on the above-described suppression influence information, each facility 100 is capable of predicting a realizable suppression amount and appropriately determining the supply and demand adjustment plan which is subdivided according to time intervals.

### (Operation and Effect)

The lower management server 300 according to the first embodiment manages suppression influence information affecting a suppression of a forward power flow amount or a reverse power flow amount and transmits the power instruction message to the facility 100 based on the suppression influence information. According to the above-described configuration, since the facility 100 transmits the power instruction message while predicting whether the power instruction message is fulfilled, it is possible to appropriately suppression the forward power flow amount or the reverse power flow amount by the power instruction message.

Also, in the first embodiment, the lower management server 300 belongs to the aggregator that is entrusted with the management of the forward power flow amount or the reverse power flow amount of the facility 100 by an electric power company but, according to the above-described configuration, the aggregator can accept the entrustment by the electric power company.

### [Second embodiment]

### (Power Management System)

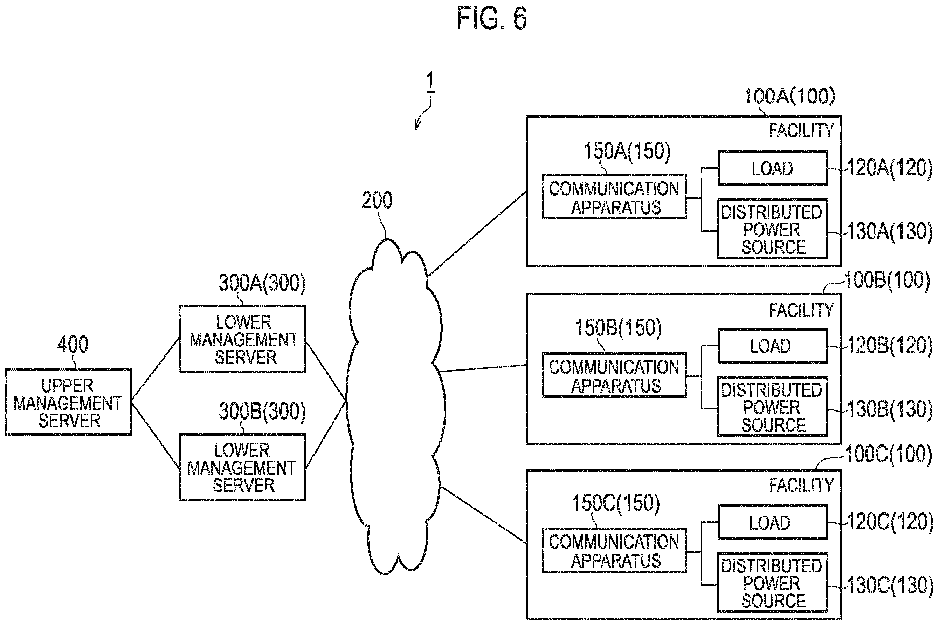

Hereinafter, a power management system according to a second embodiment will be described. As illustrated in Fig. 6, a power management system 1 includes a facility 100, a network 200, a lower management server 300, and an upper management server 400. The power management system 1 according to the second embodiment has the same configuration as the one according to the first embodiment except that the facility 100 has a communication apparatus 150 instead of the EMS 110. The facility 100 may include both of the EMS 110 and the communication apparatus 150.

In the second embodiment, a consumer's facility communication apparatus 1 is an apparatus configured to manage power of an equipment installed in the facility 100 (Energy Management System) or a PCS (Power conditioning system) configured to control the distributed power source 130. The distributed power source 130 is an equipment configured to generate power. The distributed power source 130 includes equipments, for example, a solar cell, a wind power generator, a fuel cell, a gas engine power generator, a storage battery, and the like. The distributed power source 130 may be one equipment or may include a plurality of equipments.

In the second embodiment, the facility 100 includes an energy storage apparatus. The energy storage apparatus may be, for example, a storage battery, or may be a hot-water storage apparatus. When the energy storage apparatus is a storage battery, the storage battery may be a storage battery mounted on an electric vehicle. The facility 100 may include a reverse power flow-power source that is a distributed power source 130 which generates power for performing a reverse power flow from the facility 100 to the power grid. The reverse power flow-power source may be, for example, a solar cell.

### (Communication Apparatus)

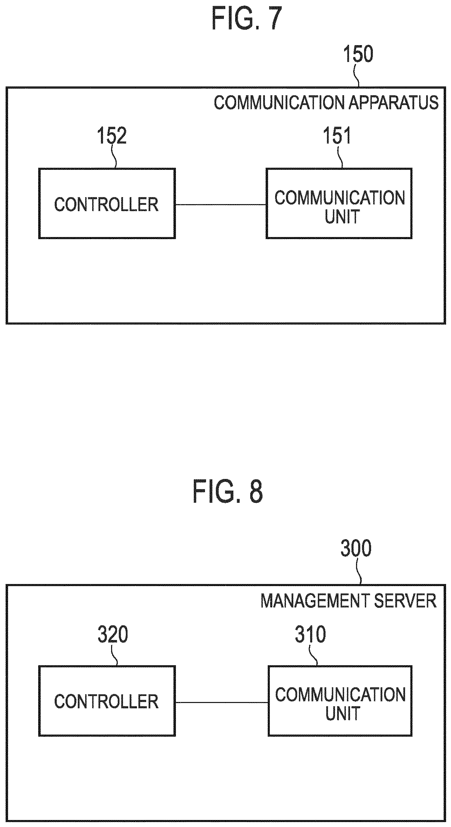

A communication apparatus according to the second embodiment will be described below. As illustrated in Fig. 7, the communication apparatus 150 includes a communication unit 151 and a controller 152.

The communication unit 151 is configured by a communication module and the like, and performs communication with the lower management server 300 or the upper management server 400. Here, a case where the communication unit 151 performs communication with the lower management server 300 is taken as an example. For example, the communication unit 151 receives, from the lower management server 300, a power instruction message including a forward power flow suppression message, or a reverse power flow suppression message, through the network 200 (a communication line).

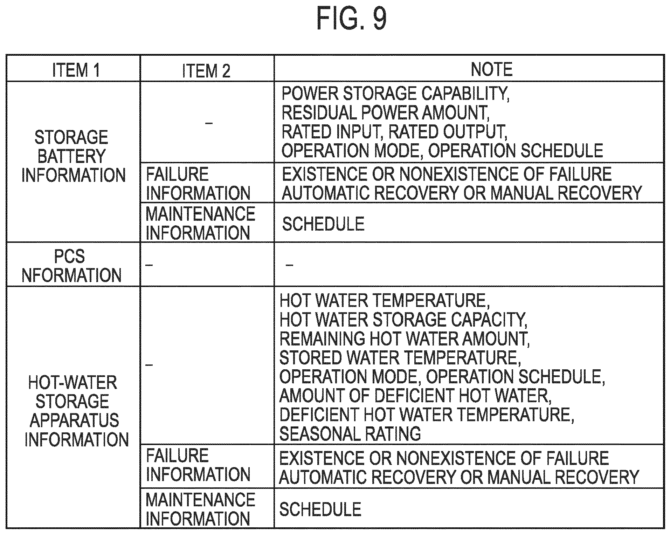

In the second embodiment, the communication unit 151 transmits storage apparatus information related to the energy storage apparatus to the lower management server 300. Although details of the energy storage apparatus will be described below, the storage apparatus information includes information related to at least one of items, such as storage battery information, PCS information, and hot-water storage apparatus information (see Fig. 9).

The controller 152 is configured by a CPU, a memory, or the like, and controls the communication unit 151. For example, the controller 152 controls at least operation state of the energy storage apparatus. The controller 152 may control an output of the reverse power flow-power source. The controller 152 performs suppression control for a forward power flow or a reverse power flow, based on the power instruction message.

### (Management Server)

A management server according to the second embodiment will be described below. Here, the lower management server 300 is illustrated as an example of the management server. The management server may be the upper management server 400. As illustrated in Fig. 8, the lower management server 300 includes a communication unit 310 and a controller 320. The lower management server 300 according to the second embodiment has the same configuration as the one according to the first embodiment except that the lower management server 300 does not include the manager 320. The lower management server 300 may include the manager 320. The manager 320 manages storage apparatus information related to the energy storage apparatus.

For example, the controller 320 determines a supply and demand adjustment plan based on the storage apparatus information received from the facility 100 (communication apparatus 150). The supply and demand adjustment plan is a plan for a transmission counterpart (facility 100) of the power instruction message and the content of the power instruction message (the suppression amount of the forward power flow or the suppression amount of the reverse power flow). The supply and demand adjustment plan may be determined per unit time length (for example, 30 minutes) for a period during which the suppression of the forward power flow amount or the reverse power flow amount is indicated by a power instruction message received from the upper management server 400.

### (Storage apparatus information)

Storage apparatus information according to the second embodiment will be described below.

As illustrated in Fig. 9, the storage apparatus information includes information corresponding to at least one of items, such as storage battery information, PCS information, and hot-water storage apparatus information.

"Storage battery information" is information related to a storage battery. It should be noted that, since the forward power flow amount is capable of being suppressed by discharge control for the storage battery, the storage battery is an equipment which contributes to the suppression control for the forward power flow. On the other hand, it should be noted that, since the reverse power flow amount is capable of being suppressed by charge control for the storage battery, the storage battery is an equipment which contributes to the suppression control for the reverse power flow.

Specifically, the storage battery information includes information related to at least one, from among a power storage capability of the storage battery, a residual power amount of the storage battery, a rated input of the storage battery, a rated output of the storage battery (for example, a rated power, a rated voltage, a rated current, or the like), an operation mode of the storage battery, and an operation schedule of the storage battery. In addition, the storage battery information may include information, such as a charging rate of the storage battery, a current output voltage, and a possible output voltage.

Accordingly, the lower management server 300 can figure out the contribution degree of the storage battery to the suppression control for the forward power flow or the reverse power flow. For example, in a case where the power storage capability is large, a case where the residual power amount is large, or a case where the rated output is large, the lower management server 300 can estimate that a possible discharge amount of the storage battery is large, and determine that the contribution degree of the storage battery to the suppression control of the forward power flow is high.

On the other hand, in a case where the power storage capability is large, a case where the residual power quantity is small, or a case where the rated input is large, the lower management server 300 can estimate that a possible charge amount of the storage battery is large, and determine that the contribution degree of the storage battery to the suppression control of the reverse power flow is high. Alternatively, the lower management server 300 can determine that the storage battery contributes to the suppression control of the forward power flow when the operation mode of the storage battery is in the discharge mode, and determine that the storage battery contributes to the suppression control of the reverse power flow when the operation mode of the storage battery is in the charge mode.

The storage battery information may include the operation schedule. The operation schedule is a schedule for discharging the storage battery from what time to what time or a schedule for charging the storage battery from what time to what time. The operation schedule may include the operation mode described above.

The storage battery information may include failure information indicating whether the storage battery is in failure, and whether a method for recovery from failure in the storage battery is automatic recovery or manual recovery. When the storage battery is in failure, the charge or discharge control of the storage battery cannot be performed. Accordingly, the lower management server 300 can determine that the storage battery does not contribute to the suppression control for the forward power flow or the reverse power flow. Also, the storage battery information may include information indicating that the reverse power flow-power source normally operates (that failure does not occur).

Furthermore, when the recovery method is automatic recovery, the recovery timing of the storage battery is considered to be earlier than in the case where the recovery method is manual recovery. Therefore, the lower management server 300 can determine that it is more likely that the storage battery of the automatic recovery contribute to the suppression control of the forward power flow or the reverse power flow than the storage battery of the manual recovery even when the storage battery is in failure.

The storage battery information includes maintenance information indicating a schedule for performing maintenance of the storage battery. During a period in which the maintenance of the storage battery is performed, the charge or discharge control of the storage battery cannot be performed. Accordingly, the lower management server 300 can determine that the storage battery, of which the maintenance is performed during a period overlapping with a suppression period for the forward power flow or the reverse power flow, does not contribute to the suppression control for the forward power flow or the reverse power flow.

"PCS information" includes information indicating whether the reverse power flow-power source and a power conversion apparatus (PCS) for controlling the storage battery are identical to each other. In the case where the reverse power flow-power source and the PCS for controlling the storage battery are identical to each other, when the suppression amount for the reverse power flow is determined by the output of the PCS, the reverse power flow amount is capable of being suppressed by the charging of the storage battery. Accordingly, the PCS information is information contributing to the suppression control for the reverse power flow. Also, the PCS information may include an installation data of PCS (equipment certification acquisition date or late date of equipment certification acquisition date and application date signing agreement acquisition date and connection contract with the electric power company).

In this case, unless the facility 100 does not generate the reverse power flow even in the suppression period for the reverse power flow, there is no need to suppression the output of the reverse power flow-power source. Therefore, the reverse power flow-power source is different from the PCS for controlling the storage battery, the storage battery still contributes to the suppression control of the reverse power flow.

"Hot-water storage apparatus information" is information related to the hot-water storage apparatus. It should be noted that, since the reverse power flow is capable of being suppressed by increase in hot-water amount of the hot-water storage apparatus, the hot-water storage apparatus is an equipment which contributes to the suppression control for the reverse power flow. On the other hand, it may be considered that, since it means that increase in the forward power flow amount is capable of being suppressed by increase in hot-water amount of the hot-water storage apparatus, the hot-water storage apparatus is an equipment which contributes to the suppression control for the forward power flow.

Specifically, the hot-water storage apparatus information includes information indicating at least one of information related to a hot-water temperature of the hot-water storage apparatus, a hot water storage capacity of the hot-water storage apparatus, and a remaining hot water amount of the hot-water storage apparatus. Accordingly, the lower management server 300 can figure out the contribution degree of the hot-water storage apparatus to the suppression control for the forward power flow or the reverse power flow. For example, in a case where the hot water storage capacity is large, or a case where the remaining hot water amount is small, the lower management server 300 can determine that the contribution degree of the hot-water storage apparatus to the suppression control of the reverse power flow is high.

Also, the hot-water storage apparatus information may include an operation mode indicating a current state of the hot-water storage apparatus. The lower management server 300 can determine whether the hot-water storage apparatus can contribute to the suppression control of the reverse power flow depending on information of whether the operation mode of the hot-water storage apparatus is in boiling or boiling-pause. Also, it is possible to determine whether continuous boiling is performed depending on information indicating whether the operation mode is automatic boiling mode or manual boiling mode, and determine whether the hot-water storage apparatus can contribute to the suppression control of the reverse power flow.

Also, the hot-water storage apparatus information may include stored water temperature indicating a current stored water temperature and a stored water temperature at the time of completion of hot-water storage. The lower management server 300 can determine whether the hot-water storage apparatus can contribute to the suppression control of the reverse power flow by comparing the current stored water temperature with the stored water temperature at the time of completion of hot-water storage based on the stored water temperature information.

Also, the hot-water storage apparatus information may include an operation schedule indicating an operation schedule of hot-water storage which is set in the hot-water storage apparatus in advance. The lower management server 300 can figure out how much to store hot water based on the operation schedule and determine whether the hot-water storage apparatus can contribute to the suppression control of the reverse power flow.

Also, the hot-water storage apparatus information may include an amount of deficient hot water to a target hot water amount or a deficient hot water temperature to a target hot water temperature. The lower management server 300 can estimate a needed power for the amount of deficient hot water to a target hot water amount in the hot-water storage apparatus or the deficient hot water temperature to a target hot water temperature in the hot-water storage apparatus, and calculate a suppression amount obtained by the suppression control of the reverse power flow.

The hot-water storage apparatus information may include a seasonal rating indicating rated power consumption information of the hot-water storage apparatus, which is different for seasons. The lower management server 300 can calculate a suppression amount obtained by the suppression control of the reverse power flow based on the seasonal rating information.

The hot-water storage apparatus information may include failure information indicating whether the hot-water storage apparatus is in failure, and whether a method for recovery from failure in hot-water storage apparatus is automatic recovery or manual recovery. When the hot-water storage apparatus is in failure, hot-water storage is not capable of being performed. Accordingly, the lower management server 300 can determine that the hot-water storage apparatus does not contribute to the suppression control for the reverse power flow.

Furthermore, when the recovery method is automatic recovery, the recovery timing of the hot-water storage apparatus is considered to be earlier than in the case where the recovery method is manual recovery. Therefore, the lower management server 300 can determine that it is more likely that the hot-water storage apparatus of the automatic recovery contribute to the suppression control of the forward power flow or the reverse power flow than the hot-water storage apparatus of the manual recovery even when the hot-water storage apparatus is in failure.

Also, the hot-water storage apparatus information may include maintenance information indicating a schedule for performing maintenance of the hot-water storage apparatus. During a period in which the maintenance of the hot-water storage apparatus is performed, the hot-water storage control of the hot-water storage apparatus is not capable of being performed. Accordingly, the lower management server 300 can determine that the hot-water storage apparatus, of which the maintenance is performed during a period overlapping with a suppression period for the reverse power flow, does not contribute to the suppression control for the reverse power flow.

### (Communication method)

A communication method according to the second embodiment will be described below.

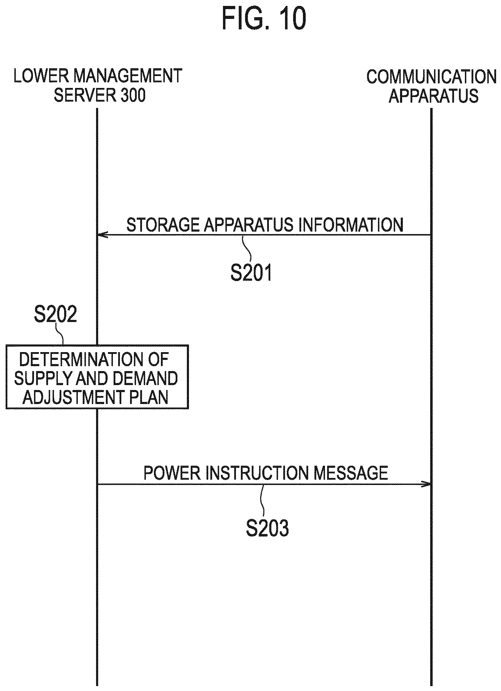

As illustrated in Fig. 10, in step S201, the communication apparatus 150 transmits storage apparatus information to the lower management server 300. As illustrated in Fig. 9, the storage apparatus information includes information corresponding to at least one of items, such as storage battery information, PCS information, and hot-water storage apparatus information.

In step S202, the lower management server 300 determines a supply and demand adjustment plan based on the storage apparatus information. The supply and demand adjustment plan is a plan for a transmission counterpart (facility 100) of the power instruction message and the content of the power instruction message (the suppression amount of the forward power flow or the suppression amount of the reverse power flow).

In step S203, the lower management server 300 transmits the power instruction message to the communication apparatus 150 based on a result of step S202.

### (Operation and Effect)

The communication apparatus 150 according to the second embodiment transmits storage apparatus information related to the reverse power flow-power source to the lower management server 300. Accordingly, the lower management server 300 may figure out, based on the storage apparatus information, information, such as whether the energy storage apparatus contributes to the suppression control for the forward power flow or the reverse power flow, or the contribution degree of the energy storage apparatus to the suppression control for the forward power flow or the reverse power flow. Therefore, it is possible to efficiently perform the suppression control for the reverse power flow with respect to the entire group of facilities managed by the management server.

Also, in the second embodiment, the lower management server 300 belongs to the aggregator entrusted with the management of the forward power flow amount or the reverse power flow amount of the facility 100 by an electric power company, but, according to the above-described configuration, the aggregator can accept the entrustment by the electric power company.

### [Modification 1]

Modification 1 of the second embodiment is described below. Differences from the second embodiment are described below. In Modification 1, there is described a timing at which the facility 100 transmits the storage apparatus information to the lower management server 300.

First, the facility 100 may transmit the storage apparatus information in response to a transmission request of the lower management server 300. The facility 100 may transmit the storage apparatus information immediately in response to a transmission request of the lower management server 300, may transmit the storage apparatus information at a timing designated by the transmission request of the lower management server 300, or when a trigger designated by the transmission request of the lower management server 300 is satisfied, may transmit the storage apparatus information. The transmission request of the lower management server 300 may include information designating a timing at which the storage apparatus information is to be transmitted or may include information indicating a trigger to be satisfied in order to transmit the storage apparatus information.

Second, the facility 100 may transmit the storage apparatus information after a suppression period for the forward power flow or the reverse power flow is started. Therefore, the lower management server 300 can review the supply and demand adjustment plan after the suppression period for the forward power flow or the reverse power flow is started.

Third, the facility 100 may transmit the storage apparatus information at a predetermined timing corresponding to the suppression period for the forward power flow or the reverse power flow. The predetermined timing is a timing before the start of the suppression period of the forward power flow or the reverse power flow. For example, the predetermined timing is represented by a relative time difference (before xx minutes or before xx hours) with respect to the start timing of the suppression period of the forward power flow or the reverse power flow.

### [Modification 2]

Modification 2 of the second embodiment is described below. Differences from the second embodiment are described below. In Modification 2, the communication apparatus 150 (communication unit 151) transmits, to the lower management server 300, power purchase price information in addition to the storage apparatus information. The power purchase price information is information indicating a power purchase price of power accompanied by the reverse power flow from the facility 100 to the power grid.

Here, the power purchase price is consideration when power output from the reverse power flow-power source is purchased. Specifically, the power purchase price is consideration for surplus power obtained by excluding the power consumed at the facility 100 from the power output from the reverse power flow-power source. Also, the power purchase price information may include at least one of a power purchase price rate and a power purchase amount. By including the power purchase amount in the power purchase price information, the lower management server 300 can figure out how much the facility 100 of target generates reverse power flow.

Generally, when the power purchase price is high, the suppression control of the reverse power flow is disadvantageous. Therefore, the lower management server 300 can preferentially select, as a transmission counterpart of the reverse power flow suppression message, the facility 100 of which the power purchase price is relatively low than the facility 100 of which the power purchase price is relatively high. Alternatively, the lower management server 300 can assign, as a suppression amount of the reverse power flow, a large suppression amount to the facility 100 of which the power purchase price is relatively low rather than the facility 100 of which the power purchase price is relatively high.

Here, the power purchase price information may include information indicating that time periods to which the power purchase price is applied are mapped to the power purchase price. Therefore, the lower management server 300 can figure out the power purchase price applied to the suppression period of the reverse power flow.

Also, the power purchase price information may include information related to output suppression schedules stored in the facility 100. As the power purchase price information, all or part of the output suppression schedules may be included. Also, the power purchase price information may include the result value of past output suppression. By including the stored output suppression schedules in the power purchase price information, the lower management server 300 can confirm the output suppression schedules recognized by the facility 100.

### [Other embodiments]

Although the present disclosure has been explained with the above-described embodiments, it should not be understood that the description and drawings constituting a part of this disclosure limit the present disclosure. From this disclosure, various alternative embodiments, examples, and operational technologies will become apparent to those skilled in the art.

The first embodiment and the second embodiment may be combined. For example, the lower management server 300 may transmit the power instruction message to the facility 100 based on the suppression influence information and the storage apparatus information.

In the embodiments, the suppression for the forward power flow amount or the reverse power flow amount has been mainly described. However, the embodiments are not limited thereto. Specifically, the embodiments can also be applied to a system that utilizes, as virtual power plant (VPP), the distributed power source installed in the facility 100. In this case, the forward power flow suppression message or the reverse power flow suppression message may be read as a power source message for requesting control of the distributed power source installed in the facility 100. The term "suppression" may be read as "control". That is, the embodiments can also be applied to a case of increasing the forward power flow amount or the reverse power flow amount. Also, when operation control of the distributed power source is performed as VPP, operation action instructed to the distributed power source as a result of suppression may be send.

As described above, the suppression influence information may be managed by the manager 320. The suppression influence information may be registered in the manager 320 in advance or may be received from the facility 100. In a case where the suppression influence information is registered in the manager 320 in advance, for example, when the contract between the aggregator such as a power distribution company and the user of the facility 100 is made, the suppression influence information is registered in the manager 320. When the suppression influence information is transmitted from the facility 100, transmission of the suppression influence information may be performed according to a method complying with the Open ADR standard. For example, transmission of suppression influence information is realized by message complying with Open ADR standard ("TELEMETRY USAGE", "TELEMETRY STATUS", "EiOpt service", "oadrDistributeEvent") or the like.

Also, predetermined information included in the suppression influence information is registered in the manager 320 in advance, or information other than the predetermined information, which is included in the suppression influence information may be received from the facility 100. The predetermined information registered in the manager 320 in advance may be static information which is not changed for each time period, such as configuration information of a load, configuration information of a distributed power source, a management state of the facility 100, and EMS capability information. The information received from the facility 100 may be dynamic information which is changed for each time period, such as state information of the load, state information of the distributed power source, the temperature of the facility 100, and the suppression time information.

In this embodiment, communication between the upper management server 400 and the lower management server 300 and communication between the lower management server 300 and the facility 100 are performed according to a scheme that complies with an Open ADR standard. However, the embodiments are not limited thereto. Communication between the lower management server 300 and the facility 100 may comply with other standards than Open ADR standard. Accordingly, a predetermined message transmitted and received between the lower management server 300 and the facility 100 may have a predetermined format defined in other standards than Open ADR standard.

The entire contents of Japanese Patent Application No. 2015-159482 (filed on August 12, 2015) and Japanese Patent Application No. 2015-169798 (filed on August 28, 2015) are incorporated herein by reference.

## Claims

1. A management server comprising:
a transmitter configured to transmit a power instruction message to a facility; and
a manager configured to manage at least one of suppression influence information and storage apparatus information, the suppression influence information affecting a suppression of a forward power flow amount from a power grid to the facility or a reverse power flow amount from the facility to the power grid, the storage apparatus information being related to an energy storage apparatus installed in the facility, wherein
the transmitter is further configured to transmit the power instruction message to the facility, based on at least one of the suppression influence information and the storage apparatus information.

2. The management server according to claim 1, wherein
the power instruction message includes at least one of a power source message requesting control for a distributed power source installed in the facility, a forward power flow suppression message requesting a suppression of the forward power flow amount, and a reverse power flow suppression message requesting a suppression of the reverse power flow amount.

3. The management server according to claim 1 or 2, further comprising
a receiver configured to receive the suppression influence information from the facility.

4. The management server according to claim 1 or 3, wherein
the suppression influence information includes equipment information related to an equipment included in the facility, and
the equipment information includes at least one piece of information of configuration information indicating configuration of the equipment and state information indicating an operation state of the equipment.

5. The management server according to claim 4, wherein
the equipment information includes any one of load information related to a load included in the facility and distributed power source information related to the distributed power source.

6. The management server according to claim 5, wherein
the load information includes information indicating a type of the load as the configuration information, or/and includes information indicating any one of power consumption of the load and an operation state of the load as the state information.

7. The management server according to claim 5, wherein
the distributed power source information includes information indicating a type of the distributed power source as the configuration information, or/and includes information indicating a possible output amount of the distributed power source as the state information.

8. The management server according to any one of claims 1 to 7, wherein
the suppression influence information includes facility environment information related to environment of the facility, and
the facility information includes information indicating at least one of a temperature of the facility and a management state of the facility.

9. The management server according to any one of claims 1 to 8, wherein
the suppression influence information includes suppression time information indicating a time at which the forward power flow amount or the reverse power flow amount is capable of being suppressed in the facility, and
the suppression time information includes information indicating at least one of:
a timing at which the suppression of the forward power flow amount or the reverse power flow amount is capable of being started in the facility,
a length of time during which the suppression of the forward power flow amount or the reverse power flow amount is capable of being continued in the facility, a time period in which the forward power flow amount or the reverse power flow amount is capable of being suppressed in the facility, and
the number of suppressions of the forward power flow amount or the reverse power flow amount, which the facility handles.

10. The management server according to any one of claims 1 to 9, wherein
the suppression influence information includes capability information related to capability of a control apparatus which controls an equipment included in the facility, and
the capability information includes information indicating at least one of:
a length of unit time for which the control apparatus is capable of controlling the equipment, and
a response time from reception of the power instruction message to a timing at which the suppression of the forward power flow amount or the reverse power flow amount is capable of being started.

11. The management server according to any one of claims 1 to 10, wherein
the energy storage apparatus is a storage battery, and
the storage apparatus information includes storage battery information related to the storage battery.

12. The management server according to claim 11, wherein
the storage battery information includes information related to at least one, from among a power storage capability of the storage battery, a residual power amount of the storage battery, a rated input of the storage battery, a rated output of the storage battery, an operation mode of the storage battery, and an operation schedule of the storage battery.

13. The management server according to claim 11 or 12, wherein
the storage battery information includes at least one, from among information indicating whether the storage battery is in failure, recovery method information indicating whether a method for recovery from failure in the storage battery is automatic recovery or manual recovery, and maintenance information indicating a schedule in which maintenance of the storage battery is performed.

14. The management server according to claim 11 or 12, wherein
the storage apparatus information includes power conversion apparatus information indicating whether a reverse power flow-power source which is a distributed power source which generates power for generating the reverse power flow and a power conversion apparatus which controls the storage battery are identical to each other.

15. The management server according to any one of claims 1 to 14, wherein
the energy storage apparatus is a hot-water storage apparatus, and
the storage apparatus information includes hot-water storage apparatus information related to the hot-water storage apparatus.

16. The management server according to claim 15, wherein
the hot-water storage apparatus information includes information indicating at least one of a hot water temperature of the hot-water storage apparatus, a hot water storage capacity of the hot-water storage apparatus, a remaining hot water amount of the hot-water storage apparatus, a stored water temperature of the hot-water storage apparatus, an operation mode of the hot-water storage apparatus, an operation schedule of the hot-water storage apparatus, an amount of deficient hot water to a target hot water amount, a deficient hot water temperature to a target hot water temperature, and a seasonal rating.

17. The management server according to any one of claims 1 to 16, wherein
the receiver is further configured to receive power purchase price information indicating a power purchase price of power accompanied by the reverse power flow from the facility to the power grid.

18. The management server according to any one of claims 1 to 17, wherein
the receiver is further configured to receive the storage apparatus information transmitted in response to a transmission request from the management server.

19. The management server according to any one of claims 1 to 17, wherein
the receiver is further configured to receive the storage apparatus information after start of a suppression period of the forward power flow or the reverse power flow.

20. The management server according to any one of claims 1 to 17, wherein
the receiver is further configured to receive the storage apparatus information at a predetermined timing corresponding to a suppression period of the forward power flow amount or the reverse power flow amount.

21. A management method comprising:
a step A of transmitting a power instruction message to the facility; and
a step B of managing at least one of suppression influence information and storage apparatus information, the suppression influence information affecting a suppression of a forward power flow amount from a power grid to the facility and a reverse power flow amount from the facility to the power grid, the storage apparatus information being related to an energy storage apparatus installed in the facility, wherein
the step A includes a step of transmitting the power instruction message to the facility, based on at least one of the suppression influence information and the storage apparatus information.

22. A management system comprising:
a transmitter configured to transmit a power instruction message to the facility; and
a manager configured to manage at least one of suppression influence information and storage apparatus information, the suppression influence information affecting a suppression of a forward power flow amount from a power grid to the facility and a reverse power flow amount from the facility to the power grid, the storage apparatus information being related to an energy storage apparatus installed in the facility, wherein
the transmitter is further configured to transmit the power instruction message to the facility, based on at least one of the suppression influence information and the storage apparatus information.
